# EUROPÄISCHE PATENTSCHRIFT

(11) **EP 0 992 722 B1**
(45) Veröffentlichungstag und Bekanntmachung des Hinweises auf die Patenterteilung: **07.05.2008**
(21) Anmeldenummer: 99109200.8
(22) Anmeldetag: 10.05.1999
(51) Int. Cl.: F16J 15/34, F16J 15/36

(54) **Gleitringdichtung**
Mechanical seal
Garniture mécanique d'étanchéité

(30) Priorität: 07.10.1998 DE 19846153
(43) Veröffentlichungstag der Anmeldung: 12.04.2000
(73) Patentinhaber: Carl Freudenberg KG, 69469 Weinheim (DE)
(72) Erfinder: Nakano, Kenji, 69469 Weinheim (DE)

(56) Entgegenhaltungen:
- DE-A- 3 909 100
- US-A- 2 100 220
- US-A- 2 443 151
- US-A- 3 372 076
- US-A- 5 199 720
- US-A- 5 797 602

## Beschreibung

Die Erfindung betrifft eine Gleitringdichtung, und bezieht sich insbesondere auf eine Gleitringdichtung, welche aus US-A-2,443,151 bekannt ist. Eine solche Gleitringdichtung umfaßt einen Gleit- und Gegenring. Der Gleitring und der Gegenring berühren einander an Dichtflächen, welche relativ verdrehbar und federkraftbeaufschlagt unter axialer Vorspannung in dichtend berührender Anlage kommen. Der Gleitring und ein dazu drehfest angeordneter Haltering sind jeweils an einem stirnseitigen Ende eines sich in axialer Richtung erstreckenden Faltenbalgs dichtend und reibschlüssig zugeordnet.

Aus EP 0 390 243 A2 ist eine Auslegungsform einer Gleitringdichtung bekannt, bei der die stirnseitigen Enden des Faltenbalgs stoffschlüssig, beispielsweise durch Schweißen oder Verkleben, mit dem Gleitring und dem Gehäuse verbunden sind. Dies ist in wirtschaftlicher und fertigungstechnischer Hinsicht wenig zufrieden stellend.

Demgegenüber liegt der Erfindung die Aufgabe zugrunde, eine Gleitringdichtung bereitzustellen, bei der sich die Herstellungskosten durch eine vereinfachte Herstellbarkeit deutlich reduzieren lassen, und man insbesondere eine Gleitringdichtung mit gleich bleibend guten Gebrauchseigenschaften während einer langen Gebrauchsdauer durch geringe mechanische Belastungen erhält, die eine ausgezeichnete statische Abdichtung zwischen dem Gleitring und dem ersten Lagerring hat.

Nach der Erfindung wird hierzu eine Gleitringdichtung mit einem Gleitring und einem Gegenring bereitgestellt, welche die Merkmale des Patentanspruchs 1 aufweist.

Bei der erfindungsgemäßen Gleitringdichtung sind die stirnseitigen Enden des Faltenbalgs mit dem Gleitring und dem Gehäuse jeweils verklemmt, wodurch man eine wesentlich vereinfachte Herstellbarkeit der Gleitringdichtung erhält. Im Reparaturfalle sind ferner die Einzelteile der Gleitringdichtung auf einfache Weise austauschbar. Wenn beispielsweise der Faltenbalg und/oder der Gleitring ausgewechselt werden sollen, wird einfach die nicht stoffschlüssige Verbindung im Bereich der stirnseitigen Enden des Faltenbalgs gelöst, die zu erneuernden Teile ausgetauscht und die neuen Bauteile werden wiederum nicht stoffschlüssig festgelegt. Hierdurch lassen sich die Reparaturkosten sehr stark reduzieren. Durch den bei der erfindungsgemäßen Gleitringdichtung aus einem polymeren Werkstoff, beispielsweise FKM (Fluorpolymerisat), bestehenden ersten Lagerring wird vermieden, daß der zumeist aus Kohle bestehende Gleitring nicht unmittelbar von dem ersten stirnseitigen Ende des Faltenbalgs und/oder einem zumeist metallischen Klemmring berührt wird. Der spröde und daher empfindliche Gleitring ist durch die Verwendung des ersten Lagerrings vor partiellen, die Gebrauchsdauer verringernden hohen mechanischen Belastungen weitgehend geschützt, so daß man eine Gleitringdichtung erhält, die gleich bleibend gute Gebrauchseigenschaften während einer langen Gebrauchsdauer hat. Bei der erfindungsgemäßen Gleitringdichtung überdeckt der erste Lagerring die dem Gegenring abgewandte Stirnseite des Gleitrings zusätzlich im wesentlichen vollständig. Hierdurch wird die Dichtfläche zwischen dem Gleitring und dem ersten Lagerring wesentlich vergrößert, so daß man eine ausgezeichnete statische Abdichtung erhält. Durch die großflächige Ummantelung des Gleitrings durch den ersten Lagerring ist die empfindliche Oberfläche des Gleitrings wirksam geschützt.

Der erste Lagerring weist bevorzugt eine Armierung auf, die vollständig von polymerem Werkstoff umschlossen ist. Die Armierung besteht zu meist aus Stahl und ist durch die vollständige Ummantelung beispielsweise vor Korrosion durch das abzudichtende Medium geschützt. Die Armierung bewirkt eine größere Steifigkeit des ersten Lagerrings und dadurch eine verbesserte Abdichtung zwischen den gegeneinander abzudichtenden Räumen.

Die beiden stirnseitigen Enden des Faltenbalgs können einen Axialflansch des Gehäuses außenseitig umschließen und durch einen Haltering unter radialer Vorspannung eingeklemmt sein, bevorzugt ohne zusätzliche Einbringung eines Dichtmittels zwischen dem Axialflansch des Gehäuses und der zweiten Stirnseite des Faltenbalgs. Die radiale Verspannung der Stirnseite mit dem Axialflansch durch den Haltering ist in konstruktiver Hinsicht einfacher als eine Verspannung der Bauteile in axialer Richtung. Außerdem ist von Vorteil, daß Bewegungen des Faltenbalgs in axialer Richtung keinen Einfluß auf die relative Zuordnung der Stirnseite des Faltenbalgs, des Axialflanschs und des Halterings zueinander haben.

Der Klemmring und der Haltering weisen bevorzugt jeweils einen Radialvorsprung auf wobei die einander zugewandten Seiten der Radialvorsprünge unter elastischer axialer Vorspannung von einer Druckfeder berührt sind. Der Faltenbalg und die Druckfeder sind damit in einer funktionstechnischen Parallelschaltung angeordnet. Gleitringdichtungen, bei denen die axiale Vorspannung zwischen Gleitring und Gegenring ausschließlich durch den Faltenbalg selbst bewirkt wird, sind im Hinblick auf gleichbleibend gute Gebrauchseigenschaften in einem breiten Temperaturbereich wenig zufriedenstellend. Der Werkstoff des Faltenbalgs ist in erster Linie abhängig vom abzudichtenden Medium auszuwählen und besteht bevorzugt aus einem Edelstahl. Die Federkraft des Faltenbalgs ist konstruktionsgemäß nicht über den erforderlichen Einsatzbereich der Gleitringdichtung gleichbleibend. Um eine gute Abdichtung zu gewährleisten, ist es daher erforderlich, eine zusätzliche Druckfeder vorzusehen, die bevorzugt ebenfalls aus einem Edelstahl besteht. Durch die funktionstechnische Trennung von Faltenbalg und Druckfeder kann jedes der Bauteile optimal an die jeweiligen Gegebenheiten des Anwendungsfalles angepaßt werden.

Der Gegenring kann mittels eines zweiten Lagerrings aus polymerem Werkstoff in einer axial in Richtung des Gleitrings offenen, nutförmigen Ausnehmung eines Mitnehmers angeordnet sein, wobei der Mitnehmer drehfest auf einer abzudichtenden Welle festlegbar ist. Bevorzugt besteht auch der zweite Lagerring, ebenso wie der erste Lagerring, aus FKM und ist primär zur Abdichtung zwischen dem zumeist aus Siliciumkarbid bestehenden Gegenring und dem aus einem metallischen Werkstoff bestehenden Mitnehmer vorgesehen. Außerdem werden herstellungsbedingte Toleranzen des Gegenrings und/oder des Mitnehmers durch den zweiten Lagerring ausgeglichen. Der zweite Lagerring ist - ebenso wie der erste Lagerring - bevorzugt winkelförmig ausgebildet und überdeckt bevorzugt die Außenumfangsfläche des Gegenrings sowie die dem Gleitring abgewandte Stirnseite vollständig.

Ein Ausführungsbeispiel einer erfindungsgemäßen Gleitringdichtung wird nachfolgend anhand der schematisch dargestellten Figur näher erläutert, welche eine Gleitringdichtung zeigt, die beispielsweise in einer Benzinpumpe für Kraftfahrzeuge zur Anwendung gelangt.

Die Gleitringdichtung besteht aus einem Gleitring 1 aus Kohle, der sich mit seiner ebenen Dichtfläche 3 an der Dichtfläche 4 des Gegenrings 2, der aus Siliciumkarbid besteht, unter axialer Vorspannung elastisch und dichtend abstützt.

Sowohl der Gleitring 1 als auch der Gegenring 2 sind außenumfangsseitig und im Bereich ihrer voneinander abgewandten Stirnseiten 13, 25 von einem jeweils winkelförmigen Lagerring 9, 21 umschlossen. Der erste und der zweite Lagerring 9, 21 sind materialeinheitlich ausgebildet und bestehen in diesem Ausführungsbeispiel jeweils aus FKM.

Die metallischen Bauteile der Gleitringdichtung bestehen in diesem Ausführungsbeispiel jeweils aus einem Edelstahl, der gegen das abzudichtende Medium 26 resistent ist.

### Zur Funktion der Gleitringdichtung wird folgendes ausgeführt:

Der Gegenring 2, der zweite Lagerring 21 und der Mitnehmer 23 bilden eine vormontierbare Einheit, die drehfest mit der abzudichtenden Welle 24 verbunden ist.

Der Gleitring 1, der erste Lagerring 9, der Klemmring 10, der Faltenbalg 8, das Gehäuse 5 sowie der Haltering 15 und die Druckfeder 20 sind einander ebenfalls drehfest zugeordnet.

Die Druckfeder 20 und der Faltenbalg 8 sind einander in einer funktionstechnischen Parallelschaltung zugeordnet und bewirken eine elastische Anpressung der Dichtflächen 3 und 4 von Gleitring 1 und Gegenring 2 in axialer Richtung aneinander.

Die erste Stirnseite 6 des Faltenbalgs 8 ist dem Gleitring 1 und die zweite Stirnseite 7 des Faltenbalgs 8 dem Gehäuse 5 ungehaftet, in diesem Ausführungsbeispiel ausschließlich kraftschlüssig zugeordnet. Dadurch, daß die Stirnseiten 7, 8 des Faltenbalgs ausschließlich geklemmt sind, wird sowohl die Montage als auch die Demontage der Gleitringdichtung wesentlich vereinfacht.

### Bezugszeichenliste

- 1: Gleitring
- 2: Gegenring
- 3: Dichtfläche des Gleitrings
- 4: Dichtfläche des Gegenrings
- 5: Gehäuse
- 6: Stirnseite des Faltenbalgs am Gleitring
- 7: Stirnseite des Faltenbalgs am Gehäuse
- 8: Faltenbalg
- 9: erster Lagerring
- 10: Klemmring
- 11: Spalt
- 12: Armierung
- 13: Stirnseite des Gleitrings
- 14: Axialflansch des Gehäuses
- 15: Haltering
- 16: Radialvorsprung des Klemmrings
- 17: Radialvorsprung des Halterings
- 18: der Druckfeder zugewandte Seite des Radialvorsprungs des Klemmrings
- 19: der Druckfeder zugewandte Seite des Radialvorsprungs des Halterings
- 20: Druckfeder
- 21: zweiter Lagerring
- 22: Ausnehmung
- 23: Mitnehmer
- 24: Welle
- 25: Stirnseite des Gegenrings
- 26: abzudichtendes Medium

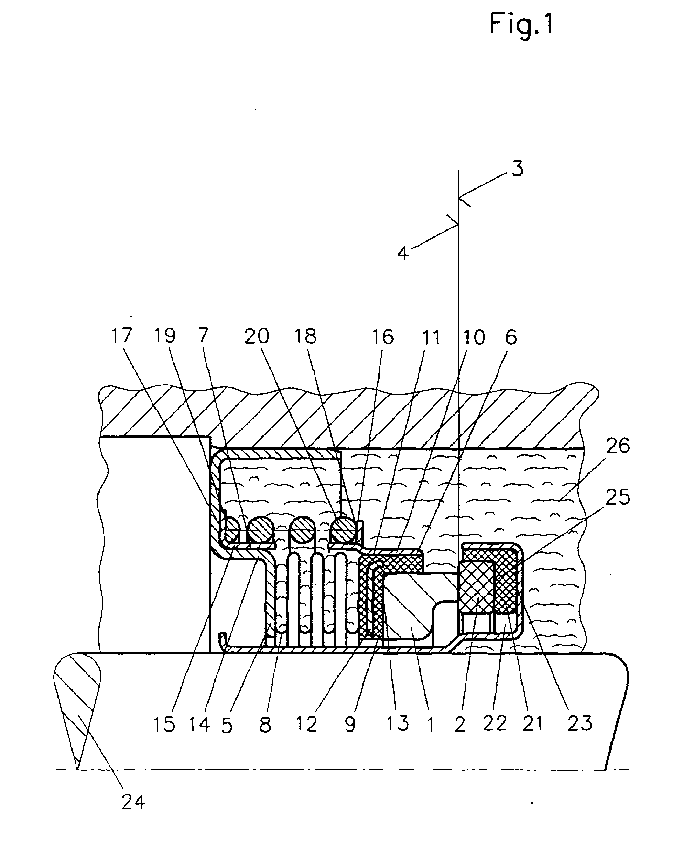

## Patentansprüche

1. Gleitringdichtung, umfassend einen Gleitring (1) und einen Gegenring (2), wobei der Gleitring (1) und der Gegenring (2) einander mit Dichtflächen (3, 4) relativ verdrehbar und federkraftbeaufschlagt mit axialer Vorspannung dichtend berühren und wobei der Gleitring (1) und ein dazu drehfest angeordnetes Gehäuse (5) jeweils einem stirnseitigen Ende (6, 7) eines sich in axialer Richtung erstreckenden Faltenbalgs (8) dichtend zugeordnet sind, wobei eines der stirnseitigen Enden (6, 7) des Faltenbalgs (8) den Gleitring (1) und das andere stirnseitige Ende (7) des Faltenbalgs (8) dem Gehäuse (5) ungehaftet kraftschlüssig zugeordnet ist, **dadurch gekennzeichnet, daß** die Verbindung zwischen Gleitring (1) und Faltenbalg (8) mittels eines ersten Lagerrings (9) aus polymerem Werkstoff erfolgt, der den Gleitring (1) außenumfangsseitig zumindest teilweise umschließt, der erste Lagerring (9) von einem Klemmring (10) mit radialem Abstand umschlossen ist, in dem durch den Abstand gebildeten Spalt (11) das erste stirnseitige Ende (6) des Faltenbalgs (8) eingeklemmt ist, und daß der erste Lagerring (9) zusätzlich die dem Gegenring (2) abgewandte Stirnseite (13) des Gleitrings (1) im wesentlichen vollständig überdeckt.

2. Gleitringdichtung nach Anspruch 1, **dadurch gekennzeichnet, daß** der erste Lagerring (9) eine Armierung (12) aufweist, die vollständig von polymerem Werkstoff umschlossen ist.

3. Gleitringdichtung nach einem der Ansprüche 1 oder 2, **dadurch gekennzeichnet, daß** das zweite stirnseitige Ende (7) des Faltenbalgs (8) einen Axialflansch (14) des Gehäuses (5) außenseitig umschließt und durch einen Haltering (15) unter radialer Vorspannung eingeklemmt ist.

4. Gleitringdichtung nach einem der Ansprüche 1 bis 3, **dadurch gekennzeichnet, daß** der Klemmring (10) und der Haltering (15) jeweils einen Radialvorsprung (16, 17) aufweisen und daß die einander zugewandten Seiten (18, 19) der Radialvorsprünge (16, 17) unter elastischer axialer Vorspannung von einer Druckfeder (20) berührt sind.

5. Gleitringdichtung nach einem der Ansprüche 1 bis 4, **dadurch gekennzeichnet, daß** der Faltenbalg (8) und die Druckfeder (20) in einer funktionstechnischen Parallelschaltung angeordnet sind.

6. Gleitringdichtung nach einem der Ansprüche 1 bis 5, **dadurch gekennzeichnet, daß** der Gegenring (2) mittels eines zweiten Lagerrings (21) aus polymerem Werkstoff in einer axial in Richtung des Gleitrings (1) offenen, nutförmigen Ausnehmung (22) eines Mitnehmers (23) angeordnet ist, und daß der Mitnehmer (23) drehfest mit einer abzudichtenden Welle (24) festlegbar ist.

7. Gleitringdichtung nach einem der Ansprüche 1 bis 6, **dadurch gekennzeichnet, daß** der Faltenbalg (8) aus einem Edelstahl besteht.

## Claims

1. Mechanical seal, comprising a sliding ring (1) and a counter ring (2), the sliding ring (1) and the counter ring (2) being rotatable in relation to each other with sealing faces (3, 4) and in contact in a sealing manner under axial prestress while loaded with the force of a spring, and the sliding ring (1) and a housing (5) that is arranged in a rotationally secure manner with respect to it respectively being assigned in a sealing manner to an extreme end (6, 7) of a bellows (8) extending in the axial direction, one of the extreme ends (6, 7) of the bellows (8) being assigned to the sliding ring (1) and the other extreme end (7) of the bellows (8) being assigned to the housing (5) such that they are unattached in non-positive engagement, **characterized in that** the connection between the sliding ring (1) and the bellows (8) is performed by means of a first bearing ring (9) of polymeric material, which at least partially encloses the sliding ring (1) on its outer circumference, the first bearing ring (9) is enclosed with a radial spacing by a clamping ring (10), the first extreme end (6) of the bellows (8) is clamped in the gap (11) formed by the spacing, and **in that** the first bearing ring (9) additionally covers substantially completely the end face (13) of the sliding ring (1) that is facing away from the counter ring (2).

2. Mechanical seal according to Claim 1, **characterized in that** the first bearing ring (9) has a reinforcement (12), which is completely enclosed by polymeric material.

3. Mechanical seal according to either of Claims 1 and 2, **characterized in that** the second extreme end (7) of the bellows (8) encloses an axial flange (14) of the housing (5) on the outside and is clamped in under radial prestress by a retaining ring (15).

4. Mechanical seal according to one of Claims 1 to 3, **characterized in that** the clamping ring (10) and the retaining ring (15) respectively have a radial projection (16, 17), and **in that** the mutually facing sides (18, 19) of the radial projections (16, 17) are in contact with a compression spring (20) under elastic axial prestress.

5. Mechanical seal according to one of Claims 1 to 4, **characterized in that** the bellows (8) and the compression spring (20) are arranged in a technically functional parallel connection.

6. Mechanical seal according to one of Claims 1 to 5, **characterized in that** the counter ring (2) is arranged by means of a second bearing ring (21) of polymeric material in a groove-shaped recess (22) of a driver (23), which recess is open axially in the direction of the sliding ring (1), and **in that** the driver (23) can be fixed in a rotationally secure manner with a shaft (24) to be sealed.

7. Mechanical seal according to one of Claims 1 to 6, **characterized in that** the bellows (8) consists of a high-grade steel.

## Revendications

1. Garniture mécanique d'étanchéité, comprenant un anneau de glissement (1) et un anneau conjugué (2), l'anneau de glissement (1) et l'anneau conjugué (2) étant en contact l'un contre l'autre de manière hermétique par des surfaces d'étanchéité (3, 4), de manière à pouvoir tourner l'un par rapport à l'autre et sous précontrainte axiale par une sollicitation par force de ressort, l'anneau de glissement (1) et un boîtier (5) disposé de manière solidaire en rotation par rapport à lui étant à chaque fois associés hermétiquement à une extrémité frontale (6, 7) d'un soufflet (8) s'étendant dans la direction axiale, l'une des extrémités frontales (6, 7) du soufflet (8) étant associée à l'anneau de glissement (1) et l'autre extrémité frontale (7) du soufflet (8) étant associée au boîtier (5), et ce sans adhésion par engagement par force, **caractérisée en ce que** la connexion entre l'anneau de glissement (1) et le soufflet (8) s'effectue au moyen d'un premier anneau de palier (9) en matériau polymère, qui entoure au moins partiellement l'anneau de glissement (1) du côté de sa périphérie extérieure, le premier anneau de palier (9) étant entouré par un anneau de serrage (10) à distance radiale, dans lequel la première extrémité frontale (6) du soufflet (8) est serrée à travers la fente (11) formée par l'espacement, et **en ce que** le premier anneau de palier (9) recouvre en outre substantiellement complètement le côté frontal (13) de l'anneau de glissement (1) opposé à l'anneau conjugué (2).

2. Garniture mécanique d'étanchéité selon la revendication 1, **caractérisée en ce que** le premier anneau de palier (9) présente un renforcement (12) qui est complètement entouré par un matériau polymère.

3. Garniture mécanique d'étanchéité selon l'une quelconque des revendications 1 ou 2, **caractérisée en ce que** la deuxième extrémité frontale (7) du soufflet (8) entoure une bride axiale (14) du boîtier (5) sur son côté extérieur et est serrée avec précontrainte radiale par un anneau de retenue (15).

4. Garniture mécanique d'étanchéité selon l'une quelconque des revendications 1 à 3, **caractérisée en ce que** l'anneau de serrage (10) et l'anneau de retenue (15) présentent à chaque fois une saillie radiale (16, 17) et **en ce que** les côtés (18, 19) tournés l'un vers l'autre des saillies radiales (16, 17) sont en contact avec un ressort de pression (20) par précontrainte élastique axiale.

5. Garniture mécanique d'étanchéité selon l'une quelconque des revendications 1 à 4, **caractérisée en ce que** le soufflet (8) et le ressort de pression (20) sont disposés suivant un montage en parallèle techniquement fonctionnel.

6. Garniture mécanique d'étanchéité selon l'une quelconque des revendications 1 à 5, **caractérisée en ce que** l'anneau conjugué (2) est disposé au moyen d'un deuxième anneau de palier (21) en matériau polymère dans un évidement (22) d'un organe d'entraînement (23) en forme de rainure, ouvert axialement dans la direction de l'anneau de glissement (1), et **en ce que** l'organe d'entraînement (23) peut être fixé de manière solidaire en rotation à un arbre (24) à étanchéifier.

7. Garniture mécanique d'étanchéité selon l'une quelconque des revendications 1 à 6, **caractérisée en ce que** le soufflet (8) se compose d'un acier spécial.
